# FASCICULE DE BREVET EUROPEEN

(11) **EP 3 152 979 B1**
(45) Date de publication et mention de la délivrance du brevet: **17.04.2019**
(21) Numéro de dépôt: 15726155.3
(22) Date de dépôt: 02.06.2015
(51) Int. Cl.: B60Q 1/26, H05B 33/08

(54) **SYSTÈME DE PILOTAGE DE L'ALIMENTATION ÉLECTRIQUE ET DE GESTION THERMIQUE D'AU MOINS UNE SOURCE LUMINEUSE**
WÄRMEVERWALTUNGS- UND STROMVERSORGUNGSSTEUERUNGSSYSTEM FÜR MINDESTENS EINE LICHTQUELLE
THERMAL MANAGEMENT AND POWER SUPPLY CONTROL SYSTEM FOR AT LEAST ONE LIGHT SOURCE

(30) Priorité: 03.06.2014 FR 1455036
(43) Date de publication de la demande: 12.04.2017
(73) Titulaire: Valeo Vision, 93012 Bobigny Cedex (FR)
(72) Inventeur: KRICK, Sébastian, 75019 Paris (FR)
(86) Numéro de dépôt international: PCT/EP2015/062267
(87) Numéro de publication internationale: WO 2015/185556

(56) Documents cités:
- WO-A2-2010/025450
- US-A1- 2004 095 120
- US-A1- 2006 043 911

## Description

L'invention a trait au domaine de l'alimentation électrique de sources lumineuses. En particulier, l'invention se rapporte à un système et procédé de pilotage de l'alimentation électrique et de gestion thermique de sources lumineuses, plus précisément de diodes électroluminescentes, LED. L'invention concerne également un dispositif lumineux pour un véhicule automobile.

Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. Entre autres, une LED est caractérisée par une valeur seuil d'intensité de courant. Ce courant direct (« forward current ») maximal est en général décroissant à température croissante. Lorsqu'un courant d'intensité supérieure à la valeur seuil est utilisé pour alimenter la LED, celle-ci peut se détériorer, voire détruire. Dans le domaine automobile, on a de plus en plus recours à la technologie LED pour diverses solutions de signalisation lumineuse. Les LEDs sont utilisées afin d'assurer des fonctions lumineuses telles que les feux diurnes, les feux de signalisation etc... Elles sont exposées à des températures de fonctionnement importantes.

Il est connu dans l'art d'utiliser un circuit de pilotage pour piloter l'alimentation d'un ensemble ou groupe de LEDs. Le circuit définit le courant qui traverse une branche montée en charge et comprenant le groupe de LEDs branchées en série. Dans le domaine des dispositifs lumineux pour véhicules automobiles, il est particulièrement important de pouvoir assurer une luminosité constante afin de garantir la sécurité des utilisateurs du véhicule et des acteurs du trafic routier. Afin de fournir un courant constant, des circuits de pilotage connus utilisent différents types de convertisseurs DC/DC pour convertir la tension continue fournie par exemple par une batterie de voiture en une tension continue de charge, dépendante du nombre de LEDs alimentées. Il est connu d'utiliser des convertisseurs DC/DC gérés par un élément microcontrôleur programmable. De tels convertisseurs sont en outre capables de changer l'intensité du courant fourni à la charge branchée, i.e., aux LEDs. Il existe des microcontrôleurs qui intègrent une gestion thermique des LEDs. Ces éléments sont capables de modifier l'intensité du courant fourni à la charge branchée en fonction de la température des LEDs, afin de prendre en compte leur comportement thermique., voir le document US 2004/095120 A1.

Pour des convertisseurs DC/DC à valeur de courant de sortie cible fixe, qui sont moins onéreux et par conséquent utilisés dans beaucoup d'applications, la gestion thermique des LEDs est problématique. L'utilisation de tels convertisseurs ne permet en général pas de piloter l'alimentation de LEDs de façon optimale. Afin d'éviter un courant trop important à toutes les températures auxquelles une LED fait face lors de son fonctionnement, il devient impératif d'utiliser une valeur d'intensité de courant cible constante minimale. De cette façon la valeur de courant direct maximale des LEDs n'est pas dépassée par le convertisseur lorsque la température de fonctionnement des LEDs est importante. Cette approche engendre pourtant des pertes en performance lumineuse à des températures moins élevées.

L'invention a pour objectif de proposer un système de pilotage de l'alimentation électrique de sources lumineuses palliant au moins un des inconvénients de l'art antérieur. L'invention à également pour objectif de proposer un procédé de pilotage de l'alimentation électrique de sources lumineuses ainsi qu'un dispositif pour un véhicule automobile utilisant le système de pilotage selon l'invention.

L'invention a pour objet un dispositif de pilotage d'alimentation électrique d'au moins une source lumineuse. Le dispositif comprend :
- un convertisseur DC/DC capable de convertir une tension électrique d'entrée en une tension électrique de sortie ;
- un circuit monté en charge du convertisseur comprenant au moins une source lumineuse, et
- des moyens d'asservissement du convertisseur, les moyens d'asservissement ayant en entrée une valeur représentative de l'intensité du courant électrique circulant dans le circuit monté en charge.

Le dispositif est remarquable en ce que les moyens d'asservissement comprennent un circuit d'ajustement, adapté à ajuster ladite valeur en une valeur asservie en fonction d'une mesure de la température obtenue par des moyens de mesure de la température ambiante.

Les moyens d'asservissement du convertisseur forment de préférence une boucle d'asservissement qui comprend le circuit d'ajustement.

Avantageusement, le dispositif de pilotage est dépourvu d'un élément microcontrôleur participant à une régulation du courant fourni à ladite source lumineuse en fonction de la température de cette source lumineuse.

Le convertisseur peut de préférence comprendre un circuit de type boost, apte à élever la tension, et/ou un circuit de type buck, apte à abaisser la tension.

La valeur représentative de l'intensité du courant électrique circulant dans le circuit monté en charge est préférentiellement obtenue par une mesure de tension aux bornes d'une résistance de shunt branchée en série avec le circuit de charge.

Avantageusement, les sources lumineuses sont des diodes électroluminescentes, LED.

Le circuit d'ajustement peut de préférence comprendre une source de tension électrique reliée aux moyens d'asservissement à travers un thermisteur. De préférence, la résistance du thermisteur décroit lorsque sa température augmente. Le thermisteur est couplé à un élément interrupteur, de façon à ce que l'interrupteur est fermé et qu'un courant d'ajustement d'une intensité prédéterminée vient s'ajouter à la valeur asservie uniquement lorsque la température du thermisteur est supérieure à une valeur seuil.

Les moyens d'asservissement peuvent de préférence comprendre un pont diviseur de tension et un miroir de courant, le courant étant injecté à l'aide de la source de tension à travers le miroir de courant et le point diviseur de tension.

Avantageusement, l'élément interrupteur est un transistor, préférentiellement un transistor à effet de champ de type MOSFET (Metal Oxyde Semiconductor Field Effect Transistor).

La valeur de température seuil est préférentiellement supérieure à 25°C, de façon à ce que l'interrupteur reste ouvert à la température ambiante de 25 °C.

Avantageusement, la valeur de température seuil correspond à la température de fonctionnement des LEDs. L'intensité du courant d'ajustement est alors choisie de façon à ce que le convertisseur, asservi par le courant d'intensité ajustée, est apte à fournir un courant de charge d'une intensité inférieure ou égale à l'intensité de courant direct maximale des LEDs à leur température de fonctionnement.

L'invention à également pour objet un dispositif lumineux pour un véhicule automobile comprenant au moins un dispositif de pilotage de l'alimentation électrique de sources lumineuses. Les sources lumineuses assurent notamment une fonction de signalisation lumineuse du véhicule automobile. Le dispositif lumineux est remarquable en ce que le dispositif de pilotage est conforme à l'invention.

L'invention a également pour objet un procédé de pilotage de l'alimentation électrique d'au moins une source lumineuse, comprenant les étapes de :
- mise à disposition d'un convertisseur DC/DC capable de convertir une tension électrique d'entrée en une tension électrique de sortie;
- mise à disposition d'un circuit monté en charge du convertisseur et comprenant au moins une source lumineuse, le convertisseur étant asservi par une valeur représentative de l'intensité du courant électrique circulant dans le circuit monté en charge et ;
- ajustement de la valeur asservie par un circuit d'adaptation en fonction d'une mesure de la température obtenue par des moyens de mesure de la température ambiante.

Grâce à l'invention, il devient possible d'utiliser un convertisseur DC/DC connu, pour lequel il n'est en soi pas possible de modifier le courant de sortie cible, afin de piloter des LEDs branchées en charge à des niveaux de courant différents. Les niveaux de courants peuvent notamment dépendre de la température de fonctionnement des LEDs. Ceci engendre un gain en performance des LEDs par rapport à l'utilisation d'un tel convertisseur sans l'invention. A basse température, un courant d'intensité élevée peut être fourni aux LEDs afin de maximiser leur luminescence. L'intensité du courant fourni est baissée en adéquation avec la chute de l'intensité de courant direct maximale qui caractérise les LEDs à des températures plus élevées. Ceci permet d'augmenter la longévité des LEDs. L'invention trouve une utilité particulière dans un dispositif de pilotage de l'alimentation de LEDs dépourvu d'un élément microcontrôleur, qui pourrait implémenter une fonction de gestion thermique des LEDs.

En ayant recours à des composants standards, durables et peu onéreux, l'invention intervient au niveau de la boucle d'asservissement du convertisseur DC/DC. En utilisant l'invention, un biais systématique et de valeur prédéfinie, qui est une fonction de la température ambiante mesurée, est introduit dans la boucle d'asservissement. La valeur d'asservissement ajustée de cette façon incite le convertisseur à fournir un courant d'intensité moindre lorsque la température mesurée augmente. A température ambiante de 25 °C, à laquelle les mesures pour l'homologation de LEDs sont notamment effectuées, la performance des LEDs et la précision du courant de sortie cible du convertisseur restent inchangées.

D'autres caractéristiques et avantages de la présente invention seront mieux compris à l'aide de la description et des dessins, qui ne sont présentés qu'à titre indicatif et non-limitatif de l'invention, et parmi lesquels :
- la figure 1 est une illustration schématique d'un mode de réalisation préférentiel du système selon l'invention ;
- la figure 2 est un diagramme de circuit illustrant un mode de réalisation préférentiel du système selon l'invention.

Des références similaires sont utilisées pour décrire des concepts semblables à travers plusieurs modes de réalisations distincts. Par exemple, les références 100, 200 décrivent un dispositif de pilotage d'alimentation électrique d'au moins une source lumineuse selon l'invention dans deux modes de réalisation distincts.

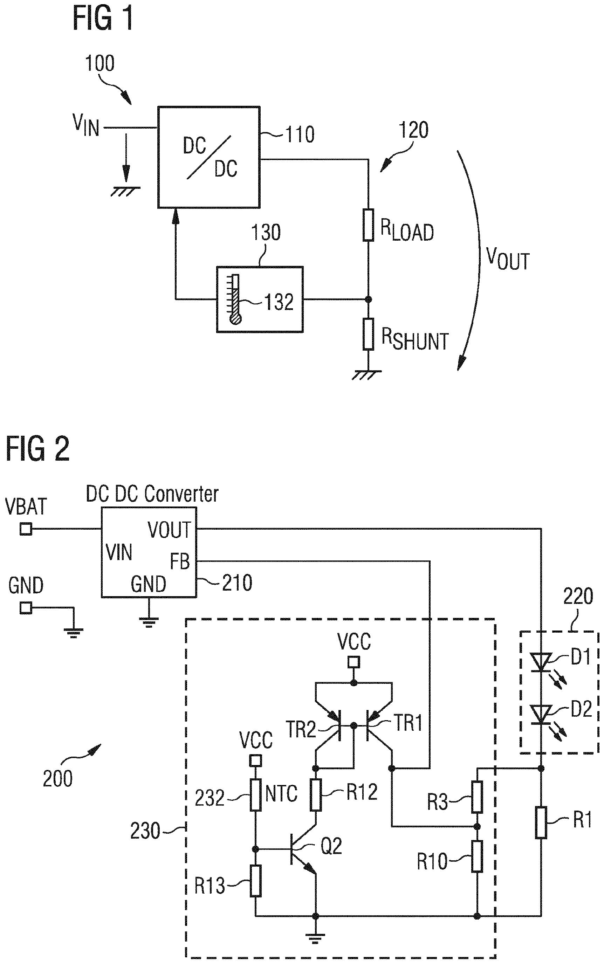

La figure 1 illustre de manière schématique un dispositif 100 de pilotage d'alimentation électrique selon l'invention. Le convertisseur 110, qui peut être un convertisseur de type buck ou boost, ou une combinaison de convertisseurs buck et boost, est capable de convertir une tension continue d'entrée, V_{IN}, fournie par une source non-illustrée, en une tension continue de sortie V_{OUT}. Le convertisseur est capable de fournir un courant d'une intensité cible fixe. Un circuit de charge 120, illustré à titre exemplaire par une résistance R_{LOAD} est alimenté à l'aide du convertisseur 110. Le circuit de charge 120 comprend au moins une, de préférence plusieurs sources lumineuses branchées avantageusement en série. Il s'agit avantageusement de diodes électroluminescentes, LED. Le dispositif 100 est dépourvu d'un élément microcontrôleur participant à une régulation du courant fourni aux LEDs en fonction de la température de celles-ci. Il est connu d'asservir un convertisseur 110 en courant, de façon à adapter l'intensité de courant fournie au circuit de charge à l'intensité de courant cible fixe du convertisseur.

Selon l'invention, la boucle d'asservissement comprend en outre un circuit d'ajustement 130 de la valeur asservie. Le circuit 130 comprend des moyens de mesure de la température ambiante 132, telles qu'un thermisteur. A l'aide des moyens de mesure, le circuit 130 est capable d'ajuster la valeur asservie en fonction de la mesure de la température. Comme les moyens de mesures sont avantageusement disposés sur le même circuit imprimé que les LEDs, la température mesurée correspond généralement à la température de fonctionnement des LEDs. La valeur réelle de l'intensité de courant passant par le circuit de charge 120 est de préférence obtenue par une mesure de tension aux bornes d'une résistance de shunt R_{SHUNT} branchée en série avec, et en aval du circuit de charge. Avantageusement, le circuit 130 comprend des moyens d'injection de courant électrique, par exemple une source de courant électrique, afin d'injecter un courant positif dans la boucle d'asservissement lorsque la température mesurée dépasse une valeur seuil. La valeur seuil peut par exemple être matérialisée par le choix du thermisteur utilisé. De préférence elle se situe au-dessus de 25 C, et avantageusement elle correspond à la température de fonctionnement des LEDs du circuit de charge 120. L'intensité du courant injecté est choisie telle que le biais ajouté à la valeur asservie incite le convertisseur 110 à baisser le courant délivré au circuit de charge 120 à une valeur qui ne dépasse pas le courant maximal accepté par les LEDs à la température seuil.

Selon l'application concrète dans laquelle l'invention trouve son utilité, l'homme du métier saura adapter la température seuil en fonction de la température de fonctionnement des LEDs. De même, l'intensité du courant injecté par le circuit 130 est choisie en dépendance du courant direct maximal des LEDs à leur température de fonctionnement et du courant cible fixe du convertisseur 110.

Le dispositif de pilotage selon l'invention est particulièrement applicable à un dispositif lumineux pour un véhicule automobile. Le convertisseur 110 est alors alimenté par une source de courant interne au véhicule automobile, telle que la batterie du véhicule automobile. Les sources lumineuses alimentées par le biais du dispositif de pilotage assurent de préférence une fonction de signalisation lumineuse du véhicule automobile.

Ceci décrit de manière générale le fonctionnement du dispositif ainsi que les étapes principales du procédé selon l'invention. Une réalisation concrète est décrite dans ce qui et à l'aide de la figure 2, sans pour autant limiter la protection à l'exemple donné. Sur base des principes décrits et de l'exemple donné, l'homme du métier sera capable d'implémenter et/ou d'adapter l'invention selon les besoins qui s'imposent. Les caractéristiques techniques décrites pour un mode de réalisation donné sont applicables à d'autres modes de réalisation de l'invention, sauf si le contraire est indiqué. Dans les modes de réalisation décrits, des diodes électroluminescentes seront considérées à titre exemplaire de sources lumineuses.

La figure 2 montre le schéma d'un circuit électronique implémentant un dispositif de pilotage d'alimentation électrique 200 selon l'invention. Les composants électroniques et le fonctionnement du convertisseur 210 ne seront pas explicités en détail dans le cadre de la présente description, puisque des convertisseurs DC/DC tels que le convertisseur 210 illustré sont en soi connus dans l'art. Un circuit de charge 220 comprend des LEDs alimentés par le convertisseur 210. Le circuit d'ajustement 230 est utilisé afin d'ajuster une valeur représentative de l'intensité du courant circulant dans le circuit de charge 220. Cette valeur initiale et non-ajustée est obtenue par une mesure de la tension aux bornes d'un montage réalisant une résistance de shunt R1.

Le circuit d'ajustement 230 comprend en outre des moyens d'injection de courant et notamment une source de tension V_{CC}. La tension V_{CC} est de préférence régulée par un élément contrôleur du convertisseur 210 afin de garantir un niveau de tension stable dont les variations sont faibles et contrôlables. La source de tension est reliée à la boucle d'asservissement du convertisseur à travers un thermisteur 232 dont la résistance décroit lorsque sa température augmente. Le thermisteur 232 est couplé à un élément interrupteur Q2 de façon à ce que l'interrupteur Q2 est fermé et qu'un courant d'ajustement d'une intensité prédéterminée est injecté dans la boucle d'asservissement uniquement lorsque la température du thermisteur 232 est supérieure à une valeur seuil. L'injection de courant se fait à travers le miroir de courant implémenté par les éléments interrupteurs ou transistors TR1 et TR2. A température ambiante, en-dessous de la température seuil matérialisée par le thermisteur 232, ce dernier ainsi que le transistor Q2 ne sont pas conducteurs et le miroir de courant n'est pas opérationnel. Le courant LED est défini par V_{ref}, par le rapport R3/R10 et par la résistance de shunt.

A des températures plus élevées, le transistor Q2 commence à devenir conducteur sous l'influence du thermisteur 232. Le miroir de courant TR1, TR2 devient opérationnel et le courant délivré est injecté dans le pont diviseur implémenté par les résistances R3 et R10. Lorsque le transistor Q2 est complètement conducteur, l'intensité de courant I12 dans le miroir de courant est donnée par V_{CC}/R12. Ce courant est donc injecté dans le point diviseur et crée ainsi un ajustement ou un biais défini par V_{offset}=I12*(R3/R10). En choisissant les grandeurs R3, R10, R12 et le thermisteur 232, l'homme du métier saura donc prédire exactement la valeur d'ajustement à haute température, lorsque le thermisteur est conducteur.

A l'aide de la description donnée, l'homme du métier saura modifier les circuits électroniques décrits et créer des circuits alternatifs implémentant des fonctions similaires sans pour autant sortir du cadre de la présente invention.

## Revendications

1. Dispositif lumineux pour un véhicule automobile comprenant au moins un dispositif de pilotage de l'alimentation électrique de sources lumineuses, le dispositif de pilotage d'alimentation électrique (100, 200) de sources lumineuses comprenant
- un convertisseur DC/DC (110, 210) capable de convertir une tension électrique d'entrée en une tension électrique de sortie;
- un circuit monté en charge (120, 220) du convertisseur (110, 210) comprenant au moins une source lumineuse;
- des moyens d'asservissement (130, 230) du convertisseur (110, 210) formant une boucle d'asservissement du convertisseur, les moyens d'asservissement (130, 230) ayant en entrée une valeur représentative de l'intensité du courant électrique circulant dans le circuit monté en charge (120, 220) ;
le dispositif de pilotage étant **caractérisé par** les moyens d'asservissement (130, 230) comprenant un circuit d'ajustement (130, 230), adapté à ajuster ladite valeur en une valeur asservie en fonction d'une mesure de la température obtenue par des moyens de mesure de la température ambiante (132, 232), et par des moyens pour injecter (TR1, TR2) un courant d'intensité ajusté par le circuit d'ajustement (130, 230) dans la boucle d'asservissement, et en ce que le dispositif de pilotage est dépourvu d'un élément microcontrôleur participant à une régulation du courant fourni à ladite source lumineuse en fonction de la température de cette source lumineuse.

2. Dispositif lumineux selon la revendication 1, **caractérisé en ce que** le convertisseur (110, 210) comprend un circuit de type boost, apte à élever la tension, et/ou un circuit de type buck, apte à abaisser la tension.

3. Dispositif lumineux selon une des revendications 1 ou 2, dans lequel la valeur représentative de l'intensité du courant électrique circulant dans le circuit monté en charge (120, 220) est obtenue par une mesure de tension aux bornes d'une résistance de shunt (R1) branchée en série avec le circuit de charge.

4. Dispositif lumineux selon une des revendications 1 à 3, **caractérisé en ce que** les sources lumineuses sont des diodes électroluminescentes, LEDs, (D1, D2).

5. Dispositif lumineux selon une des revendication 1 à 4, dans lequel le circuit d'ajustement (130, 230) comprend une source de tension électrique reliée aux moyens d'asservissement à travers un thermisteur (232), le thermisteur (232) étant couplé à un élément interrupteur, (Q2), de façon à ce que l'interrupteur est fermé et qu'un courant d'ajustement d'une intensité prédéterminée vient s'ajouter à la valeur asservie uniquement lorsque la température du thermisteur (232) est supérieure à une valeur seuil.

6. Dispositif lumineux selon la revendication 5, dans lequel la valeur de température seuil est supérieure à 25 °C, de façon à ce que l'interrupteur reste ouvert à la température ambiante de 25 °C.

7. Dispositif lumineux selon la revendication 3 et selon une des revendications 5 ou 6, dans lequel la valeur de température seuil correspond à la température de fonctionnement des LEDs, et dans lequel l'intensité du courant d'ajustement est choisie de façon à ce que le convertisseur (110, 210) asservi par le courant d'intensité ajustée, est apte à fournir un courant de charge d'une intensité inférieure ou égale à l'intensité de courant direct maximal des LEDs à leur température de fonctionnement.

## Patentansprüche

1. Leuchtvorrichtung für ein Kraftfahrzeug, die mindestens eine Steuervorrichtung der Stromversorgung von Lichtquellen aufweist, wobei die Steuervorrichtung der Stromversorgung (100, 200) von Lichtquellen enthält
- einen DC/DC-Wandler (110, 210), der eine elektrische Eingangsspannung in eine elektrische Ausgangsspannung umwandeln kann;
- einen unter Last montierten Schaltkreis (120, 220) des Wandlers (110, 210), der mindestens eine Lichtquelle enthält;
- Regeleinrichtungen (130, 230) des Wandlers (110, 210), die einen Regelkreis des Wandlers bilden, wobei die Regeleinrichtungen (130, 230) am Eingang einen für die Stärke des im unter Last montierten Schaltkreis (120, 220) fließenden elektrischen Stroms repräsentativen Wert haben;
wobei die Steuervorrichtung **dadurch gekennzeichnet ist, dass** die Regeleinrichtungen (130, 230) einen Anpassungsschaltkreis (130, 230) enthalten, der geeignet ist, den Wert auf einen Wert anzupassen, der abhängig von einer Messung der Temperatur geregelt wird, die von Messeinrichtungen der Umgebungstemperatur (132, 232) erhalten wird, und durch Einrichtungen (TR1, TR2), um einen Strom einer vom Anpassungsschaltkreis (130, 230) im Regelkreis eingestellten Stärke einzuspeisen, und dass die Steuervorrichtung kein Mikrocontrollerelement enthält, das an einer Regelung des Stroms beteiligt ist, der an die Lichtquelle abhängig von der Temperatur dieser Lichtquelle geliefert wird.

2. Leuchtvorrichtung nach Anspruch 1, **dadurch gekennzeichnet, dass** der Wandler (110, 210) einen Schaltkreis von der Art Boost, der die Spannung erhöhen kann, und/oder einen Schaltkreis von der Art Buck enthält, der die Spannung senken kann.

3. Leuchtvorrichtung nach einem der Ansprüche 1 oder 2, wobei der für die Stärke des im unter Last montierten Schaltkreis (120, 220) fließenden Stroms repräsentative Wert durch eine Spannungsmessung an den Klemmen eines Shunt-Widerstands (R1) erhalten wird, der mit dem Lastschaltkreis in Reihe geschaltet ist.

4. Leuchtvorrichtung nach einem der Ansprüche 1 bis 3, **dadurch gekennzeichnet, dass** die Lichtquellen Elektrolumineszenzdioden, LEDs, (D1, D2) sind.

5. Leuchtvorrichtung nach einem der Ansprüche 1 bis 4, wobei der Anpassungsschaltkreis (130, 230) eine elektrische Spannungsquelle enthält, die mit den Regeleinrichtungen über einen Thermistor (232) verbunden ist, wobei der Thermistor (232) mit einem Unterbrecherelement (Q2) so gekoppelt ist, dass der Unterbrecher geschlossen ist und ein Anpassungsstrom einer vorbestimmten Stärke dem geregelten Wert nur dann hinzugefügt wird, wenn die Temperatur des Thermistors (232) höher als ein Schwellwert ist.

6. Leuchtvorrichtung nach Anspruch 5, wobei der Schwelltemperaturwert höher als 25°C ist, damit der Unterbrecher bei der Umgebungstemperatur von 25°C offen bleibt.

7. Leuchtvorrichtung nach Anspruch 3 und nach einem der Ansprüche 5 oder 6, wobei der Schwelltemperaturwert der Betriebstemperatur der LEDs entspricht, und wobei die Stärke des Anpassungsstroms so gewählt wird, dass der vom Strom mit angepasster Stärke geregelte Wandler (110, 210) fähig ist, einen Laststrom einer Stärke geringer als die oder gleich der maximalen Gleichstromstärke der LEDs auf ihrer Betriebstemperatur zu liefern.

## Claims

1. Light device for a motor vehicle comprising at least one power supply control device for light sources, the power supply control device (100, 200) for light sources comprising
- a DC-to-DC converter (110, 210) which can convert an input electrical voltage into an output electrical voltage;
- a converter (110, 210) load-mounted circuit (120, 220) comprising at least one light source;
- converter (110, 210) automatic control means (130, 230) forming an automatic loop control for the converter, the automatic control means (130, 230) having, at input, a value representing the intensity of the electric current flowing in the load-mounted circuit (120, 220);
the control device being **characterized by** the automatic control means (130, 230) comprising an adjusting circuit (130, 230), suitable for adjusting said value into an automatically controlled value as a function of a measurement of the temperature obtained by means for measuring the ambient temperature (132, 232), and by means (TR1, TR2) for injecting a current of an intensity adjusted by the adjusting circuit (130, 230) in the automatic control loop, and
in that the control device does not a microcontroller element which contributes to regulation of the current provided to said light source as a function of the temperature of this light source.

2. Light device according to Claim 1, **characterized in that** the converter (110, 210) comprises a boost circuit, which can raise the voltage, and/or a buck circuit, which can lower the voltage.

3. Light device according to either of Claims 1 and 2, wherein the value representing the intensity of the electric current flowing in the load-mounted circuit (120, 220) is obtained by measuring voltage at the terminals of a shunt resistor (R1) connected in series with the load circuit.

4. Light device according to one of Claims 1 to 3, **characterized in that** the light sources are light-emitting diodes, LEDs, (D1, D2).

5. Light device according to one of Claims 1 to 4, wherein the adjusting circuit (130, 230) comprises an electrical voltage source connected to the automatic control means through a thermistor (232), the thermistor (232) being connected to a switch element (Q2), such that the switch is closed and an adjusting current of a predetermined intensity is added to the automatically controlled value only when the temperature of the thermistor (232) is above a threshold value.

6. Light device according to Claim 5, wherein the threshold temperature value is greater than 25°C, such that the switch remains open at the ambient temperature of 25°C.

7. Light device according to Claim 3 and according to either of Claims 5 and 6, wherein the threshold temperature value corresponds to the operating temperature of the LEDs, and wherein the intensity of the adjusting current is chosen such that the converter (110, 210), automatically controlled by the current of adjusted intensity, is suitable for providing a load current of an intensity less than or equal to the maximum forward current intensity of the LEDs at the operating temperature thereof.
